# EUROPÄISCHE PATENTSCHRIFT

(11) **EP 0 770 332 B1**
(45) Veröffentlichungstag und Bekanntmachung des Hinweises auf die Patenterteilung: **23.05.2001**
(21) Anmeldenummer: 95202779.5
(22) Anmeldetag: 16.10.1995
(51) Int. Cl.: A23G 3/20, A23G 3/00, A23P 1/08

(54) **Mehrschichtdessert, sowie Verfahren und Vorrichtung zu seiner Herstellung**
Multilayer dessert, process and apparatus for producing the product
Dessert multicouche ainsi que le procédé et l'appareil pour sa production

(43) Veröffentlichungstag der Anmeldung: 02.05.1997
(73) Patentinhaber: SOCIETE DES PRODUITS NESTLE S.A., 1800 Vevey (CH)
(72) Erfinder: Elhaus, Bernd, D-84453 Muehldorf Am Inn (DE); Eder, Hans-Christian, A-1120 Wien (AT); Liebenspacher, Franz, D-84453 Muehldorf Am Inn (DE)
(74) Vertreter: Thomas, Alain

(56) Entgegenhaltungen:
- DE-A- 2 239 986
- FR-A- 2 511 848
- US-A- 3 470 831
- US-A- 4 932 317
- PATENT ABSTRACTS OF JAPAN vol. 005 no. 085 (C-057) ,3.Juni 1981 & JP-A-56 029956 (AOYAGI SOUHONKE:KK) 25.März 1981,

## Beschreibung

Die Erfindung betrifft ein Mehrschichtdessert mit einer oder mehreren hitzebehandelten Komponenten, die aus Mousse, Creme, Gelee und/oder Sauce bestehen. Die Erfindung betrifft weiter das Verfahren zur Herstellung dieses Desserts und die Vorrichtung zur Durchführung des Verfahrens.

Im Kühlsektor stehen schon Mehrschichtdessert zur Verfügung : Sie bestehen aus verschiedenen Komponenten, wie zum Beispiel Mousse und Creme die übereinanderliegen.

Der Erfindung liegt die Aufgabe zugrunde, ein solches Mehrschichtdessert anzubieten, das aber zusätzlich mindestens eine brüchige dünne Schicht, z. B. aus Schokolade, beinhaltet, damit der Konsument beim Verzehr einerseits ein zusätzliches Knackerlebnis beim Durchdringen der jeweiligen Schicht mit dem Löffel hat und andererseits ein neues Mundgefühl durch die Teile der vorher zerstörten Schicht erlebt.

Was das Verfahren der beiliegenden Erfindung betrifft, ist es schon bekannt Backwaren mit einer Schokoladenschicht zu überziehen : Die DE-A-2239986 und das US Patent 3'470'831 betreffen schon ein solches Verfahren. Die Vorrichtung, die gemäß dieser Technologie verwendet wird, ist aber eine Zweistoffdüse, d. h. eine Düse, die mit Druckluft betrieben wird. Und zusätzlich, betrifft dieses bekannte Verfahren nie eine Mehrschichtdesserttechnologie.

Die Erfindung betrifft ein Mehrschichtdessert gemäß Oberbegriff des Anspruchs 1, wobei die Komponente mit einer duchgehenden sterilisierten Schicht von Fettglasur bzw. Schokolade einer Dicke zwischen 0,1 und 3 mm überzogen ist bzw. wobei die Komponenten durch eine oder mehrere durchgehende sterilisierte Schichten von Fettglasur bzw. Schokolade einer Dicke zwischen 0,1 und 3 mm getrennt sind und diese Komponenten eine Bostwick Viskosität unterhalb 8 cm aufweisen.

Das erfindungsgemässe Produkt ist vorgesehen im Kühlsektor angeboten zu werden, und es sollte innerhalb von 4 bis 6 Wochen nach Herstellungsdatum verzehrt werden.

Verschiedene Versionen des Mehrschichtdesserts sind in Betracht zu ziehen, z.B. eine erste Version, wobei man nur eine Komponente hat, die mit der Schicht überzogen wird. Die Schicht von Fettglasur bzw. Schokolade ist durchgehend, damit beim Verzehr effektiv ein Brechen der Schicht stattfinden kann. Bei einer zweiten Version beispielsweise ist es möglich eine Schicht von Mousse zu haben und dann eine Schicht von Schokolade, eine Schicht von Gelee, eine neue Schicht von Schokolade und schließlich die gleiche Mousse wie obenerwähnt. Alle Variationen mit verschiedenen Komponenten sind möglich. In diesem Fall ist es notwendig, eine durchgehende Schicht zu haben, damit man die Trennung der verschiedenen Komponenten auch bei Auslagerung gewährleistet bleibt und ein zusätzliches Knackerlebnis bzw. Mundgefühl entsteht.

Die Dicke der Schicht ist auch kritisch : Eine zu dünne Schicht bringt kein Bruchgefühl und eine zu dicke Schicht führt zur zu großer Mühe, mit dem Löffel die Schicht zu brechen. Es ist deswegen vorgesehen, die Dicke der Schicht zwischen 0,1 und 3 mm zu haben , vorzugsweise nimmt man eine Schicht von ca. 1 mm.

Unter Mousse versteht man ein aufgeschlagenes Milchfrischprodukt. Unter Creme versteht man eine Milchphase mit Geliermitteln, wie z. B. ein Pudding. Unter Gelee versteht man eine Fruchtmarmelade und Sauce bedeutet eine Milch- bzw. Wasserphase mit Frucht und/oder Aromen, wie z. B. Vanille.

In den Bereich der Erfindung kommen alle möglichen Kombinationen, wie z.B. Mousse-Creme, Mousse-Sauce-Mousse, Pudding-Sauce-Pudding.

Die Komponenten müssen hitzebehandelt werden, d. h. sie sind entweder sterilisiert oder pasteurisiert.

Die jeweiligen Komponenten müssen eine gewisse Viskosität aufweisen, damit die aufzubringende Schicht nicht in diese untenliegende Komponente hineindringt. Die Viskosität darf auch nicht zu hoch sein, sonst ist ein glattes (ebenes) Abfüllen nicht möglich. Die Bostwick Viskosität der Komponenten liegt unterhalb 8 cm. Unter Bostwickviskosität versteht man die Messung des Fliessweges eines Produktes auf einer schiefen Ebene während 120 Sek. bei 20 °C. Diese Messung wird mit einem Gerät der Firma Kinematica AG ( Littau, Schweiz ) durchgeführt. Im Fall von Sauce liegt die Bostwickviskosität in der Nähe von 8 und im Fall von Mousse eher im Bereich von 2.

Alle Prozentangaben in der folgenden Beschreibung sind als Gewichtsprozente zu verstehen. Die verwendete Schokolade besteht aus einer Mischung von Kakaobutter, Kakaopulver bzw. Kakaolikör, Zucker und Aromen. Der Gehalt an Kakaobutter beträgt von 50 bis 90 % der Mischung. Die Fettglasur besteht aus Pflanzenfett, ggf. Kakaopulver, Zucker und Aromen. Unter Pflanzenfett versteht man z.B. Kokoshartfett , dessen Gehalt in der Mischung 50 bis 90 % beträgt.

Der Zuckeranteil in der Schokolade bzw. Fettglasur beträgt bis zu 17 %, vorzugsweise liegt man im Bereich von 2 bis 3 %. Als Zucker wird Flüssigzucker verwendet.
Die Erfindung betrifft weiter das Verfahren zur Herstellung dieses Mehrschichtdesserts, wobei die Komponente bzw. die Komponenten mit einer ultrahygienisch oder aseptischen Maschine abgefüllt werden und wobei jede Schokolade- bzw. Fettglasurschicht mit einem Einstoffsprühsystem unter einem Sprühdruck zwischen 5 und 200 bar und bei einer Temperatur zwischen 20 und 60 °C aufgebracht wird.

Im Falle der ersten Version des Mehrschichtdesserts besteht die Abfüllinie aus folgenden Elementen : Transportband zur Zuführung der sterilisierten Becher, Abfüllstation der Mousse, Sprühstation für die Schokoladeschicht und Station zur Siegelung des Deckels. Im Falle der zweiten Version, muss man gegenüber der obenerwähnten Linie zusätzliche Stationen zur Abfüllung der weiteren Mousselagen vorsehen. Darüber hinaus muss eine weitere Sprühstation eingebaut werden.

Die Schokolademasse muss beim Aufbringen flüssig sein : Deswegen muss die Temperatur dieser Masse oberhalb des Schmelzpunktes liegen, d. h.zwischen 20 und 60 °C. Man arbeitet unter hohem Druck, damit das Besprühen gleichmässig geschieht. Der Druck darf auch nicht zu hoch sein, wegen Eindringen und Overspray. Man arbeitet vorzugsweise unterhalb 80 bar.

Selbstverständlich steht die ganze Linie unter ultrahygienischen bzw. aseptischen Bedingungen.

Das Vorbereiten der Schokolade- bzw. Fettglasurmasse geschieht folgendermassen : Man mischt die verschiedenen Produkte der Zusammensetzung, dispergiert die Mischung und sterilisiert, normalerweise bei einer Temperatur von ca. 125 °C während 5-10 min. Die sterilisierte Masse wird dann mit einer Pumpe zum Zerkleinern der Kakaopulveragglomerate einer Kolloidmühle oder einem Homogenisator zugeführt. Anschliessend erfolgt eine Filtrierung.

Die Schokolade- bzw.- Fettglasurmasse ist dann bereit um dem Sprühsystem zugeführt zu werden. Um tadelloses Besprühen zu erlauben, muss man darauf achten , dass in dem Zufuhrsystem immer eine Temperatur oberhalb des Schmelzpunktes der Masse gewährleistet wird.

Die Dauer des Besprühens ist abhängig von der gewissen Schichtdicke und von den Düsenmündung: Normalerweise, liegt die Dauer zur Dosierung jedes Bechers im Rahmen einer Sekunde. Das ist in guter Uebereinstimmung mit der Geschwindigkeit der bestehenden Abfüllmaschinen.

Vorzugsweise nimmt man einen Sprühdruck zwischen 70 und 80 bar und die Temperatur der Schokolademasse liegt bei ca. 30-40°C. In diesem Bereich hat man die geeignete Viskosität, um ein einwandfreies Besprühen zu gewährleisten.

Die Erfindung betrifft weiter die Vorrichtung zur Dosierung der Fettglasur bzw. Schokoladeschicht, wobei sie aus zwei zusammen gebundenen Linien besteht: eine chargenmässig-betriebene Herstellungslinie und eine kontinuierlich-betriebene Sprühlinie. Als Herstellungslinie versteht man eine Linie zur Vorbereitung der Schokolade- bzw. Fettglasurmasse.

Die Herstellungslinie besteht aus folgenden miteinander verbundenen Elementen:
- Dispergier- und Sterilisationsapparat,
- Pumpe,
- Kolloidmühle oder Homogenisator und
- Filter.

Die Behandlung in einer Kolloidmühle oder einem Homogenisator ist notwendig, um die Kakaopartikeln so fein wie möglich zu mahlen, damit ausgeschlossen wird, dass eine Gefahr der Verstopfung des Sprühsystems besteht : Die Grösse der Partikel liegt im Bereich von 100 bis 200 Microns.

Wenn die Schokolademasse bereit ist, wird sie einem Vorlagebehälter mit Temperaturregelung zugeführt, und dann mit einer Pumpe zu dem Einstoffsprühsystem gefördert.

Was das Einstoffsprühsystem betrifft, hält man den hohen Druck mit einer einzigen Kolbenpumpe aufrecht, oder man verfügt über je eine Kolbendosierpumpe pro Sprühstation. Bei der ersten Lösung umfasst die Sprühlinie eine Kolbenpumpe, mindestens einer Sprühpistole und ein Gegendruckventil, wobei jede Sprühpistole aus einem getakteten Nadelventil und einer Hohlkegeldralldüse besteht. Bei der zweiten Lösung weist das Einstoffsprühsystem mindestens einen Einstoffsprühdoseur auf, wobei jeder Einstoffsprühdoseur aus einer getakteten Kolbendosierpumpe, einem getakteten Nadelventil und einer Hohlkegeldralldüse besteht.

Das Einstoffsprühsystem besteht aus mehreren Sprühpistolen bzw. Sprühdoseuren, z.B. von 1 bis 12.

Zur näheren Erläuterung der Erfindung werden in den nachstehenden Ausführungsbeispielen die Erfindung anhand der Zeichnungen beschrieben. Es zeigen :
Fig. 1 das Mehrschichtdessert gemäß der ersten Version,
Fig. 2 das Mehrschichtdessert gemäß der zweiten Version
Fig. 3 eine schematische Darstellung der erfindungsgemässen Vorrichtung. gemäß der zweiten Lösung
Fig. 4 eine schematische Darstellung der erfindungsgemässen Vorrichtung gemäß der ersten Lösung (mit nur den unterschiedlichen Hochdruckteil).

Der Becher (1) mit dem Deckel (2) beinhaltet eine Mousse (3) ,die mit einer Schicht von Schokolade (4) überzogen ist. Die Schokoladeschicht besteht aus einer Mischung von 50 % Kakaopulver, 46 % Kakaofett, 3% Flüssigzucker und 1% Aromen. Diese Schicht hat eine Dicke von 1,5 mm. Die Mousse besteht aus einer aufgeschlagenen Mischung von Milch, Fett, Schokoladenpulver und Verdickungsmittel. Sie hat eine Bostwickviskosität von 5 cm. Dieses Dessert kann im Kühlschrank während 4 Wochen aufbewahrt werden.

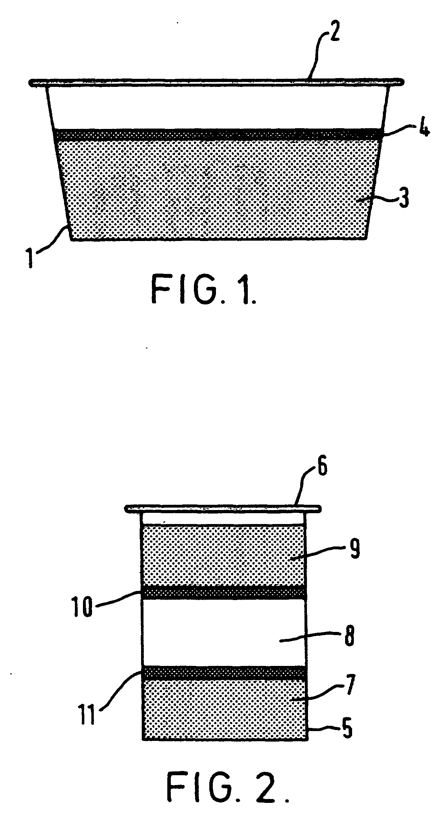

Fig. 2 zeigt die zweite Version : Der Becher (5) mit dem Deckel (6) beinhaltet von unten bis oben des Bechers eine Mousse (7),eine erste Schicht von Schokolade (11), eine Sauce (8), eine zweite Schicht von Schokolade (10) und eine Mousse (9), die ähnlich ist mit Mousse (7). Die Zusammensetzung der Mousse und der Schokolade ist die gleiche wie diejenige der Fig. 1. Die Schichten der Schokolade haben eine Dicke von 1 mm. Die Sauce besteht aus einer Mischung von Milch, Aromen und Verdickungsmittel und weist eine Bostwickviskosität von 6 cm.

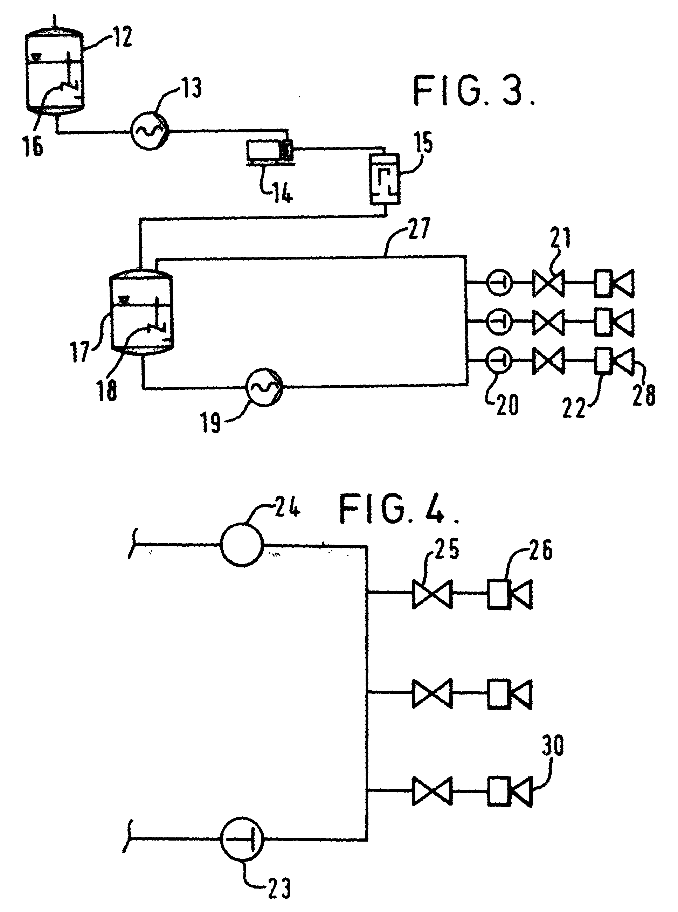

In Verbindung mit Fig. 3 sieht man die Vorrichtung zur Herstellung und Besprühen der Schokolademasse. Im Kessel (12) bereitet man die Mischung des Kakaopulvers, der Kakaobutter, des Flüssigzuckers und der Aromen. Der Rührer (16) gewährleistet eine homogene Mischung : Diese Mischung wird dann bei einer Temperatur von 125 °C während 10 Min. sterilisiert. Die Pumpe (13) erlaubt, die sterilisierte Schokolademasse der Kolloidmühle (14) zuzuführen , wobei die Kakaopulverpartikel auf eine Grösse von ca. 100 Microns gemahlen werden. Der Filter (15) vermeidet einen Zugang von groben Partikeln ins Sprühsystem. Die ganze Vorrichtung steht unter einer Temperatur von ca. 40 °C. In den Kessel (17) kommt die filtrierte Schokolademasse, die mit Rührer (18) homogen gehalten wird. Eine Pumpe (19) bringt die Masse zum jeweiligen Einstoffsprühsystem, das aus einer Kolbendosierpumpe (20), einem Nadelventil (21) und einer Hohlkegeldralldüse (22) besteht. Die Kolbendosierpumpe zwingt eine gewisse Menge aus Schokolade in die Speicherkammer des Nadelventils, wobei die Nadel dann öffnet und erlaubt, die gewünschte Menge (28) Schokolade zu sprühen. Da die Vorrichtung kontinuierlich arbeitet, bleibt jedesmal eine gewisse Menge Schokolade unverbraucht, welche durch Leitung (27) zurück in den Kessel (17) geht. Man arbeitet normalerweise mit jeder Kolbendosierpumpe bei einem Druck von 75 bar und die Schokolademasse wird auf einer Temperatur von 37-38°C gehalten. Die Kolbendosierpumpe und das Nadelventil arbeiten taktweise. Bei der Schokoladedosierung bleibt die Nadel ca. 0,25 Sek. geöffnet, wobei eine Schicht von 1,5 mm dosiert wird. Die Linie arbeitet mit 5000 Becher pro Stunde.

Fig. 4 zeigt nur den Hochdruckteil der Sprühlinie gemäss der ersten Lösung. Hinter einer Pumpe (19) (Fig. 3) schliesst sich nun eine einzige Kolbenpumpe (23) an. Sie fördert die Schokolade an den Sprühpistolen, die aus jeweils einem getaktetem Nadelventil (25) und einer Hohlkegeldralldüse (26) bestehen, zu einem Gegendruckventil (24). Hinter den Gegendruckventil (24) gelangt die nicht versprühte Schokolade wiederum im Kessel (17) (Fig. 3). Die unter hohem Druck stehende Schokolade (zwischen Kolbenpumpe (23) und Gegendruckventil (24)) wird durch Öffnen des Nadelventils (25) zu den Düsen (26) gefördert und dort die gewünschte Menge (30) versprüht.

## Patentansprüche

1. Mehrschichtdessert mit mindestens einer hitzebehandelten Komponente, die aus Mousse, Creme, Gelee und/oder Sauce besteht, dadurch gekennzeichnet, dass diese Komponente mit einer durchgehenden sterilisierten Schicht von Fettglasur bzw. Schokolade einer Dicke zwischen 0,1 und 3 mm überzogen ist bzw. dass diese Komponenten durch eine durchgehende sterilisierte Schicht von Fettglasur oder Schokolade einer Dicke zwischen 0,1 und 3 mm getrennt sind und dass die Komponente bzw. Komponenten eine Bostwick Viskosität unterhalb 8 cm aufweisen, wobei die Bostwick Viskosität die Messung des Fliessweges der Komponente auf einer schiefen Ebene während 120 Sek. bei 20°C bedeutet.

2. Mehrschichtdessert gemäß Anspruch 1, dadurch gekennzeichnet, dass die Fettglasur aus Pflanzenfett, ggf. Kakaopulver, Zucker und Aromen besteht.

3. Mehrschichtdessert gemäß Anspruch 1, dadurch gekennzeichnet, dass die Schokolade aus einer Mischung von Kakaobutter, Kakaopulver bzw. Kakaolikör, Zucker und Aromen besteht.

4. Mehrschichtdessert gemäß Ansprüche 1 bis 3, dadurch gekennzeichnet, dass der Anteil von Zucker zwischen 1 und 17% beträgt und zwar in der Form von Flüssigzucker.

5. Verfahren zur Herstellung des Mehrschichtdesserts gemäß Ansprüche 1 bis 3, wobei die Komponente bzw. die Komponenten mit einer ultrahygienischen oder aseptischen Maschine abgefüllt werden, dadurch gekennzeichnet, dass jede Schokolade- bzw. Fettglasurschicht mit einem Einstoffsprühsystem unter einem Sprühdruck zwischen 5 und 200 bar und bei einer Temperatur zwischen 20 und 60°C aufgebracht wird.

6. Verfahren gemäß Anspruch 4, dadurch gekennzeichnet, dass die Schokolade- bzw. Fettglasurmasse vor dem Aufbringen sterilisiert, zerkleinert und filtriert wird.

7. Verfahren gemäß Ansprüchen 4 oder 5, dadurch gekennzeichnet, dass jede Dosierung der Fettglasur- oder Schokoladeschicht im Rahmen einer Sekunde erfolgt.

8. Verfahren gemäß Ansprüchen 4 bis 6, dadurch gekennzeichnet, dass die Zudosierung der Schokolade- oder Fettglasurschicht unter einem Druck zwischen 70 und 80 bar und unter einer Temperatur von 30-40°C geschieht.

9. Vorrichtung zur Dosierung der Fettglasur bzw. Schokoladeschicht, dadurch gekennzeichnet, dass sie aus zwei verbundenen Linien besteht: eine chargenmässig-betriebene Herstellungslinie und eine kontinuierlich-betriebene Sprühlinie, wobei die Herstellungslinie aus folgenden miteinander verbundenen Elementen besteht:
- Dispergier- und Sterilisationsapparat,
- Pumpe,
- Kolloidmühle oder Homogenisator und
- Filter
und die Sprühlinie aus folgenden Elementen besteht:
- Vorlagebehälter mit Temperaturregelung,
- Pumpe und
- Einstoffsprühsystem.

10. Vorrichtung gemäß Anspruch 9, dadurch gekennzeichnet, dass das Einstoffsprühsystem mindestens einen Einstoffsprühdoseur aufweist, wobei jeder Einstoffsprühdoseur aus einer getakteten Kolbendosierpumpe, einem getakteten Nadelventil und einer Hohlkegeldralldüse besteht.

11. Vorrichtung gemäß Anspruch 9, dadurch gekennzeichnet, dass das Einstoffspruhsystem eine Kolbenpumpe, mindestens einer Sprühpistole und ein Gegendruckventil aufweist, wobei jede Sprühpistole aus einem getakteten Nadelventil und einer Hohlkegeldralldüse besteht.

12. Vorrichtung gemäß Ansprüche 10 oder 11, dadurch gekennzeichnet, dass das Einstoffsprühsystem zwischen 2 und 12 Einstoffsprühdoseure bzw. Sprühpistolen aufweist.

## Claims

1. A multilayer dessert having at least one heat-treated component, which consists of mousse, cream, jelly and/or sauce, characterised in that this component is covered with a continuous sterilised layer of oily glaze or chocolate between 0.1 and 3 mm thick or in that these components are separated by a continuous sterilised layer of oily glaze or chocolate between 0.1 and 3 mm thick and in that the component or components have a Bostwick viscosity of below 8 cm, wherein the Bostwick viscosity means the measurement of the flow path of the component on an inclined plane for 120 seconds at 20°C.

2. A multilayer dessert according to claim 1, characterised in that the oily glaze consists of vegetable oil, optionally cocoa powder, sugar and flavourings.

3. A multilayer dessert according to claim 1, characterised in that the chocolate consists of a mixture of cocoa butter, cocoa powder or cocoa liquor, sugar and flavourings.

4. A multilayer dessert according to claims 1 to 3, characterised in that the sugar is present in a proportion of between 1 and 17 % and in the form of liquid sugar.

5. A process for producing the multilayer dessert according to claims 1 to 3, wherein the component or components are packaged using an ultrahygienic or aseptic machine, characterised in that each chocolate or oily glaze layer is applied with a single-fluid spraying system under a spraying pressure of between 5 and 200 bar and at a temperature of between 20 and 60°C.

6. A process according to claim 4, characterised in that the chocolate or oily glaze mass is sterilised, comminuted and filtered prior to application.

7. A process according to claims 4 or 5, characterised in that each metered release of the oily glaze or chocolate layer is performed within one second.

8. A process according to claims 4 to 6, characterised in that apportioning of the chocolate or oily glaze layer proceeds under a pressure of between 70 and 80 bar and at a temperature of from 30-40°C.

9. A device for metering the oily glaze or chocolate layer, characterised in that it consists of two connected lines: a batch-operated production line and a continuously operated spraying line, wherein the production line consists of the following interconnected components:
- dispersing and sterilising apparatus,
- pump,
- colloid mill or homogeniser and
- filter
and the spraying line consists of the following components:
- feed container with temperature control,
- pump and
- single-fluid spraying system.

10. A device according to claim 9, characterised in that the single-fluid spraying system comprises at least one single-fluid metered sprayer, wherein each single-fluid metered sprayer consists of a timed piston metering pump, a timed needle valve and a hollow cone swirl nozzle.

11. A device according to claim 9, characterised in that the single-fluid spraying system comprises a piston pump, at least one spray gun and a counterpressure valve, wherein each spray gun consists of a timed needle valve and a hollow cone swirl nozzle.

12. A device according to claims 10 or 11, characterised in that the single-fluid spraying system comprises between 2 and 12 single-fluid metered sprayers or spray guns.

## Revendications

1. Dessert multicouche comprenant au moins un composant traité à la chaleur, qui est constitué de mousse, de crème, de gelée et/ou de sauce, caractérisé en ce que ce composant est revêtu d'une couche stérilisée continue d'un glaçage de matière grasse ou de chocolat d'une épaisseur comprise entre 0,1 et 3 mm, ou en ce que ces composants sont séparés par une couche stérilisée continue d'un glaçage de matière grasse ou de chocolat d'une épaisseur comprise entre 0,1 et 3 mm, et en ce que le composant ou les composants présentent une consistance Bostwick inférieure à 8 cm, la consistance Bostwick désignant la mesure du parcours d'écoulement du composant sur un plan incliné à 20 °C pendant 120 secondes.

2. Dessert multicouche suivant la revendication 1, caractérisé en ce que le glaçage de matière grasse est constitué d'une graisse végétale, éventuellement de cacao en poudre, de sucre et d'arômes.

3. Dessert multicouche suivant la revendication 1, caractérisé en ce que le chocolat est constitué d'un mélange de beurre de cacao, de cacao en poudre ou de liqueur de cacao, de sucre et d'arômes.

4. Dessert multicouche suivant les revendications 1 à 3, caractérisé en ce que la proportion de sucre s'élève de 1 à 17 %, à savoir sous forme de sirop de sucre.

5. Procédé de production du dessert multicouche suivant les revendications 1 à 3, dans lequel le composant ou les composants sont délivrés par une machine ultrahygiénique ou aseptique, caractérisé en ce que chaque couche de chocolat ou de glaçage de matière grasse est appliquée à l'aide d'un système pulvérisateur à une seule substance sous une pression de pulvérisation comprise entre 5 et 200 bars et à une température comprise entre 20 et 60°C.

6. Procédé suivant la revendication 4, caractérisé en ce que la masse de chocolat ou de glaçage de matière grasse est stérilisée, broyée et filtrée avant l'application.

7. Procédé suivant les revendications 4 ou 5, caractérisé en ce que chaque dosage de la couche de glaçage de matière grasse ou de chocolat est effectué dans l'intervalle d'une seconde.

8. Procédé suivant les revendications 4 à 6, caractérisé en ce que le dosage de la couche de chocolat ou de glaçage de matière grasse s'effectue sous une pression comprise entre 70 et 80 bars, et à une température de 30 à 40°C.

9. Dispositif de dosage de la couche de glaçage de matière grasse ou de chocolat, caractérisé en ce qu'il est constitué de deux chaînes en liaison : une chaîne de production fonctionnant en discontinu et une chaîne de pulvérisation fonctionnant en continu, la chaîne de production étant constituée des éléments suivants, liés les uns aux autres :
- appareil de dispersion et de stérilisation,
- pompe,
- broyeur à colloïdes ou homogénéiseur, et
- filtre,
et la chaîne de pulvérisation est constituée des éléments suivants :
- réservoir à régulation de température,
- pompe, et
- système pulvérisateur pour composant unique.

10. Dispositif suivant la revendication 9, caractérisé en ce que le système pulvérisateur pour composant unique présente au moins un doseur pulvérisateur pour composant unique, chaque doseur pulvérisateur pour composant unique étant constitué d'une pompe doseuse à piston synchronisée, d'une soupape à pointeau synchronisée et d'une buse à cône creux à effet de torsion.

11. Dispositif suivant la revendication 9, caractérisé en ce que le système pulvérisateur pour composant unique présente une pompe à piston, au moins un pistolet pulvérisateur et une soupape de contre-pression, chaque pistolet pulvérisateur étant constitué d'une soupape à pointeau synchronisée et d'une buse à cône creux à effet de torsion.

12. Dispositif suivant les revendications 10 ou 11, caractérisé en ce que le système pulvérisateur pour composant unique présente entre 2 et 12 doseurs pulvérisateurs pour composants uniques ou pistolets pulvérisateurs.
